# EUROPEAN PATENT APPLICATION

(11) **EP 3 343 492 A1**
(43) Date of publication of application: **04.07.2018**
(21) Application number: 16839354.4
(22) Date of filing: 25.08.2016
(51) Int. Cl.: G06Q 30/06, G06Q 50/12, G07G 1/00, G07G 1/12

(54) **ORDER MANAGEMENT SERVER, ORDERING SYSTEM, AND RECORDING MEDIUM**

(30) Priority: 26.08.2015 JP 2015166995
(71) Applicant: Recruit Holdings Co., Ltd., Tokyo 104-0061 (JP)
(72) Inventor: MAEZAWA, Ryuichiro, Tokyo 100-6640 (JP)
(74) Representative: EIP
(86) International application number: PCT/JP2016/074873
(87) International publication number: WO 2017/034007

(57) **Abstract**

To provide an order management technique for enabling a user to order and receive commodities without leaving a seat and grasp a standard waiting time until reception of the commodities. When receiving order information from the portable terminal 100, the management server 300 refers to a status and the like of other order information registered in an order management table TA2, calculates a standard waiting time until delivery of commodities corresponding to the order information is completed, and notifies the standard waiting time to the portable terminal 100. Further, the management server 300 transmits the order information to an order receiving terminal 200 of a store A. The order receiving terminal 200 of the store A outputs order receipts (two) using a printer 250 concerning the order information transmitted from the management server 300.

## Description

### CROSS-REFERENCE TO RELATED APPLICATION

This application is based upon and claims priority from Japanese Patent Application No. 2015-166995 filed on August 26, 2015, the description contents of which are incorporated herein.

### Technical Field

The present invention relates to a technique for managing orders for commodities in an event venue and the like.

### Background Art

A large event that gathers a large number of users such as a sports event is held in a facility (a stadium, etc.) including identifiable seats (e.g., A-4 seat) allocated at reservation times such that the users can take seats and watch a game.

When a user desires to eat and drink in such an event, in general, the user finds a vendor, who comes and goes in the facility and sells foods and drinks, and orders foods and drinks or goes to a kiosk (a store) in the facility and orders foods and drinks.

### Citation List

### Patent Literature

Patent Literature 1: Japanese Patent Laid-Open No. 2002-203017

### Summary of Invention

However, the vendor usually has only one kind of a food or a drink and does not always have commodities (e.g., beer and a boxed lunch) desired by the user. Therefore, in most cases, the user has to wait until vendors having the commodities come nearby. However, there is a problem in that this is inefficient because the user cannot predict when the vendors come.

On the other hand, when the user goes to the kiosk, the user goes to the kiosk halfway in the game or waits until a halftime, goes to the kiosk, and purchases commodities. However, in most cases, a long line is formed in front of the kiosk. There is also a problem in that it takes time to actually purchase commodities and, since it is unknown how long the user has to wait to purchase desired commodities, the user misses an important scene of the game while waiting.

The present invention has been devised in view of the circumstances explained above, and one object of the invention is to provide an order management technique for enabling a user to order and receive commodities without leaving a seat and, when ordering commodities, grasp a standard waiting time until reception of the commodities. Other objects of the present invention will become apparent with reference to the entire specification.

An order management server according to an embodiment of the present invention includes: a receiving unit that receives an order for commodities transmitted from a portable terminal; a generating unit that generates order information including at least a type and a number of the ordered commodities and reception time of the order; a storing unit that registers the generated order information; a calculating unit that, when new order information is registered in the storing unit, calculates, on the basis of the order information already registered in the storing unit and the order information registered anew, a standard waiting time required for delivery of commodities related to the order information registered anew; and a notifying unit that notifies the calculated standard waiting time to the portable terminal.

In the configuration explained above, an aspect is desirable in which, when there are a plurality of commodities related to the order information registered anew, the calculating unit calculates individual standard waiting times concerning the respective commodities.

Further, in the configuration explained above, an aspect is desirable in which, when being inquired about a standard waiting time from the portable terminal, the notifying unit notifies the calculated standard waiting time.

Note that the server and the system are aspects of the present invention. The server and the system of the present invention may be any combinations of the components explained above. An apparatus, a method, a computer program, a recording medium, and the like of the present invention have the same configuration.

### Advantageous Effects of Invention

According to the present invention, the user can order and receive commodities without leaving a seat and, when ordering commodities, grasp a standard waiting time until reception of the commodities.

### Brief Description of the Drawings

[Figure 1] Figure 1 is a diagram showing a schematic configuration of an order system 1000 according to an embodiment.
[Figure 2] Figure 2 is a diagram illustrating an order screen.
[Figure 3] Figure 3 is a block diagram showing a main configuration of an order receiving terminal 200.
[Figure 4] Figure 4 is a diagram illustrating an order management screen.
[Figure 5] Figure 5 is a flowchart showing a job flow in the order system 1000.
[Figure 6] Figure 6 is a sequence chart showing a processing flow among a portable terminal 100, a management server 300, and the order receiving terminal 200 during an order.
[Figure 7] Figure 7 is a sequence chart showing a processing flow between the management server 300 and the order receiving terminal 200 during status update for order information.
[Figure 8] Figure 8 is a sequence chart in performing sequence management using three order receiving terminals 200A to 200C.
[Figure 9] Figure 9 is a diagram showing a display example of a standard waiting time.
[Figure 10] Figure 10 is a diagram showing a display example of a standard waiting time.
[Figure 11] Figure 11 is a sequence chart showing a processing flow among the portable terminal 100, the management server 300, and the order receiving terminal 200 during an order.

### Description of Embodiment

An embodiment of the present invention is explained in detail below with reference to the drawings. Note that the same elements are denoted by the same reference numerals and signs. Redundant explanation of the elements is omitted.

### A. Embodiment

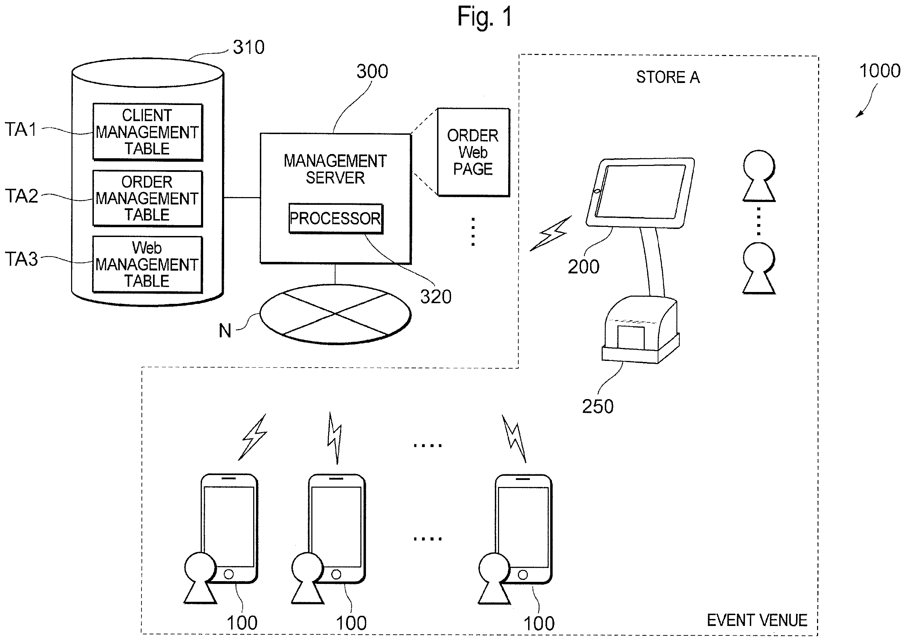

Figure 1 is a diagram showing a schematic configuration of an order system 1000 according to an embodiment.
As shown in the figure, the order system 1000 includes portable terminals 100 carried by users who come to see a sports game, an order receiving terminal 200 that performs reception of order information of commodities (including various services) transmitted from the portable terminals 100, and a management server 300 that manages the order receiving terminal 200.

This embodiment is explained with reference to an example in which the order system 1000 is applied to an event venue (e.g., an arena or a stadium) where a sports event is held. However, this does not mean to limit the order system 1000 to the example. The order system 1000 is applicable to all facilities (both indoors and outdoors). In Figure 1, the order receiving terminal 200 is set in a store (a store A). However, when a plurality of stores (the store A, a store B, and the like) are placed in one event venue, the order receiving terminal 200 may be provided in each of the stores. Further, in this embodiment, commodities (beer, snacks, etc.) related to eating and drinking are illustrated as order information. However, it is possible to appropriately change according to system operation and the like what kinds of commodities or services the order system 1000 is applied to.

The portable terminals 100 are configured by, for example, smartphones. The portable terminals 100 generate order information of commodities sold in the store A according to operation by the users and transmit the order information. The order information transmitted from the portable terminals 100 is received by the order receiving terminal 200 and the management server 300 through a communication network N. As the portable terminals 100, all terminal devices accessible to the Internet such as a personal computer (PC), a notebook PC, a cellular phone, and a portable information terminal (PDA) can be used.

The order receiving terminal 200 is configured by, for example, a tablet terminal. The order receiving terminal 200 receives various kinds of order information transmitted from the portable terminals 100. The order receiving terminal 200 is set in, for example, a predetermined place (e.g., a kitchen) of the store A. Responsible staff members of the store A are capable of, for example, viewing the order receiving terminal 200. The order receiving terminal 200 is not meant to be limited to the tablet terminal. All terminal devices capable of exchanging data with the management server 300 via the communication network N such as a personal computer (PC), a notebook PC, a smartphone, a cellular phone, and a portable information terminal (PDA) can be used.

A printer 250 is connected to the order receiving terminal 200 by a wired cable or by radio. The printer 250 issues, for each order information, a receipt on which the order information is printed (hereinafter referred to as "order receipt"). In this embodiment, the printer 250 issues two order receipts at a time. A reason for this is explained below in detail.

The management server 300 is configured by, for example, a computer having a high arithmetic processing ability. A predetermined server program operates in the computer, whereby the management server 300 realizes a server function. The computer configuring the management server 300 does not always need to be one computer and may be configured from a plurality of computers distributed on the communication network N. The management server 300 includes a database 310 for managing the order receiving terminal 200 for each of facilities and a processor 320. The database 310 includes a client management table TA1, an order management table TA2, and a Web management table TA3.

In the client management table TA1, a peculiar ID and a peculiar pass code (account) are associated and registered for each of the facilities. Unique identification information (e.g., "ID: A1") and the like are set for the order receiving terminal 200 used in the "store A". The identification information only has to be set by an administrator or the like of the store A, for example, when the system is introduced. Note that, when a plurality of order receiving terminals 200 are used in the same facility, the same identification information may be set for all the order receiving terminals 200. However, a different kind of identification information may be set for each of the order managing terminals 200.

In the order management table TA2, details of order information (an order number, types and the numbers of ordered commodities, order time, a seat position, an instruction, etc.) and a status of the order information ("unattended", "cooking completed", "delivery completed", etc.) are registered for each of the facilities. To explain referring to an example, in the store A, the order number is "0018", the reception time is "14:11", the types and the numbers of ordered commodities are "green soybeans/one and beer/three", the status is "unattended", the seat is "W210-013-T10", and the instruction is "none". Registration content of the order management table TA2 is changed on the basis of new registration operation for order information performed by using the portable terminals 100 and update operation for the status of the order information performed by using the order receiving terminals 200.

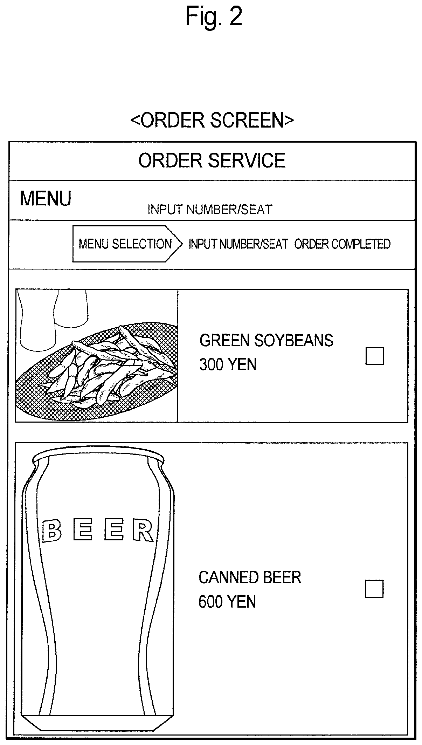

In the Web management table TA3, an order screen related to commodities is registered for each of the facilities. Figure 2 is a diagram illustrating the order screen. A URL or the like of the order screen is notified to the users in advance. Alternatively, the users are accessible to the order screen from the portable terminals 100 by, for example, reading a QRL code. When accessing the order screen, the users operate the portable terminals 100 as appropriate to order commodities. Order information and the like corresponding to the commodity order are registered in the order management table TA2 as explained above.

The processor 320 is configured by an arithmetic and logic operation unit (a CPU, etc.) that processes an arithmetic operation, a logic operation, a bit operation, and the like and various registers. The processor 320 executes various programs stored in storing means such as a ROM to centrally control units of the management server 300. The processor 320 also executes a computer program (an order management application) for managing orders in cooperation with the order receiving terminal 200.

The communication network N includes a communication network capable of mutually transmitting and receiving information between the management server 300 and the order receiving terminal 200. The communication network N may be any of, for example, the Internet, a LAN, a leased line, a telephone line, an intra-company network, a mobile communication network, Bluetooth, WiFi (Wireless Fidelity), other communication lines, and combinations of the foregoing. It does not matter whether the communication network N is wireless or not.

The communication network N includes a communication network capable of mutually transmitting and receiving information between the management server 300 and the order receiving terminal 200. The communication network N may be any of, for example, the Internet, a LAN, a leased line, a telephone line, an intra-company network, a mobile communication network, Bluetooth, WiFi (Wireless Fidelity), other communication lines, and combinations of the foregoing. It does not matter whether the communication network N is wired or wireless.

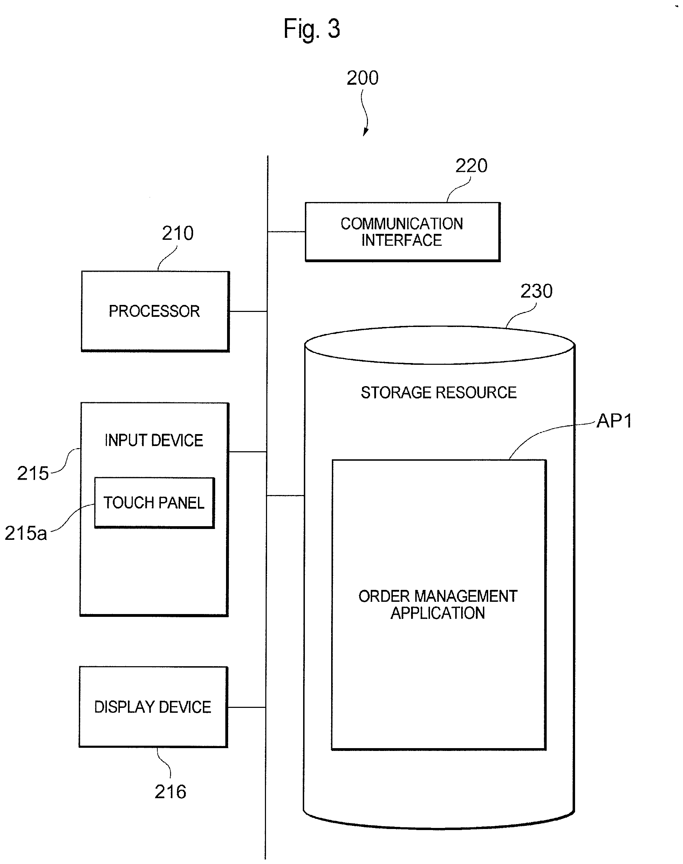

Figure 3 is a block diagram showing a main configuration of the order receiving terminal 200. The order receiving terminal 200 includes a processor 210, an input device 215, a display device 216, a communication interface 220, and a storage resource 230. A responsible staff member in the store A operates the input device 215, whereby the order receiving terminal 200 receives registration and the like of order information, a status of which is updated.

The processor 210 is configured from an arithmetic and logic operation unit (a CPU, etc.) that processes an arithmetic operation, a logic operation, a bit operation, and the like and various registers. The processor 210 executes various programs stored in the storage resource 230 to centrally control the units of the order receiving terminals 200. The various registers are, for example, a program counter, a data register, a command register, a general-purpose register, and the like.

The input device 215 includes various operation buttons and a touch panel 215a for receiving new registration operation for order information, update operation for a status, and the like by the responsible staff member.

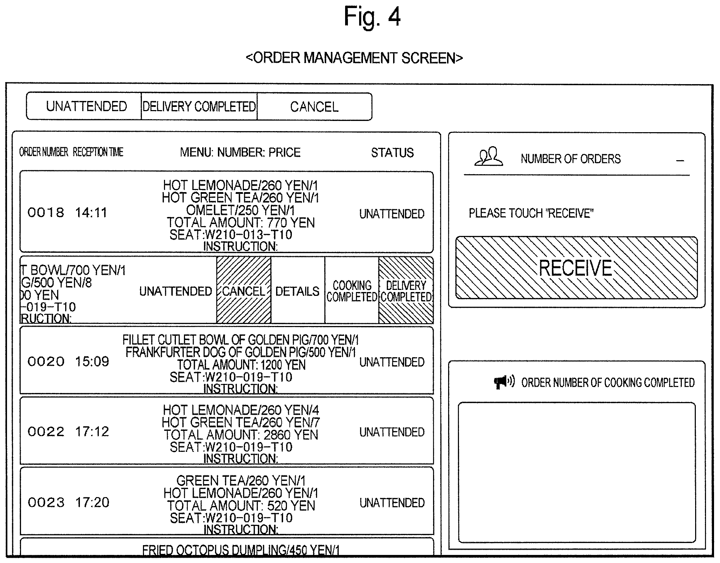

The display device 216 is a device for displaying an order management screen, on which reception is performed, shown in Figure 4. The display device 216 is configured by, for example, a liquid crystal display.

The communication interface 220 is a hardware module connected to the communication network N to perform communication with other terminals on the communication network N. The communication interface 220 is a modulation demodulation device such as an ISDN modem, an ADSL modem, a cable modem, an optical modem, or a software modem.

The storage resource 230 is, for example, a logical device provided by a storage region of a physical device. The physical device is a computer-readable recording medium such as a disk drive or a semiconductor memory (a ROM, a RAM, etc.). The storage resource 230 may be constructed by mapping a plurality of physical devices to one logical device or may be constructed by mapping one physical device to a plurality of logical devices.

An operating system program, a driver program, various data, and the like are stored in the storage resource 230. Examples of the driver program include a communication interface driver program for controlling the communication interface 220. In the storage resource 230, besides the various programs and the various data, a program (an order management application) AP1 executed by the processor 210 to manage order information in cooperation with the management server 300 is stored.
The operation of the order system 1000 in this embodiment is explained.

### (A job flow from order to delivery)

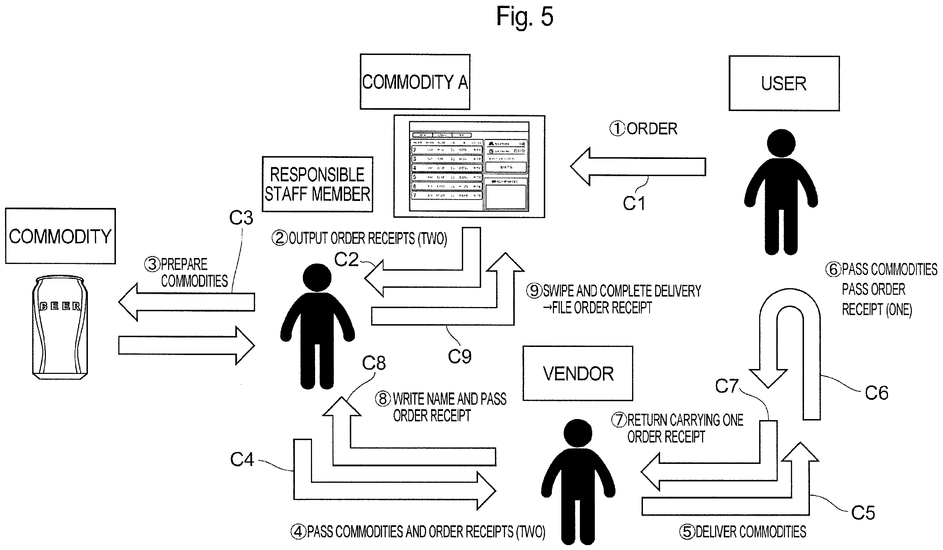

Figure 5 is a diagram schematically showing a job flow from a time when an order for commodities is performed until delivery is completed.

First, the user accesses an order Web page using the portable terminal 100 and makes an order for commodities with the store A (C1). The management server 300 creates order information according to the order from the user and transmits the order information to the store A. When receiving the order information, the order receiving terminal 200 of the store A prints the received order information on two receipts (hereinafter, order receipts) and outputs the order information from the printer 250 (C2). A responsible staff member who manages commodities in the store A prepares the commodities provided to the user on the basis of the order information printed on the order receipts (C3) and thereafter passes the order receipts (two) to a vendor together with the commodities (C4). The vendor delivers the commodities to the user, who orders the commodities, while referring to a seat position (e.g., "W210-013-T10") described on the order receipts (C5). The vendor passes the commodities to the user and passes the order receipt (one) to the user as a customer's receipt (C6). When receiving the commodities, the user performs settlement using cash, a cash card, or the like. Naturally, when the portable terminal 100 is in a state in which some electronic billing system can be used, the user may perform card-less settlement using the electronic billing system.

When the delivery of the commodities is completed in this way, the vendor returns to the store A carrying the remaining one order receipt (C7), signs a name of the vendor on the order receipt, and passes the order receipt to the responsible staff member (C8). The responsible staff member causes the order receiving terminal 200 to display the order management screen and thereafter performs swipe operation or the like to perform an input indicating that the delivery is completed (C9). As shown in Figure 4 referred to above, on the order management screen, a status of order processing is displayed together with an order number, reception time, a menu, the number of commodities, and a price. When the responsible staff member specifies, referring to the order receipt, the order on which attendance is completed, the responsible staff member swipes a status portion corresponding to the order and selects a command for "delivery completed" to input, to the order receiving terminal 200, indication to the effect that the delivery of the ordered commodities is normally completed. When ending such an input, the responsible staff member files the remaining one receipt in a folder or the like and ends the processing.

### (An order processing flow)

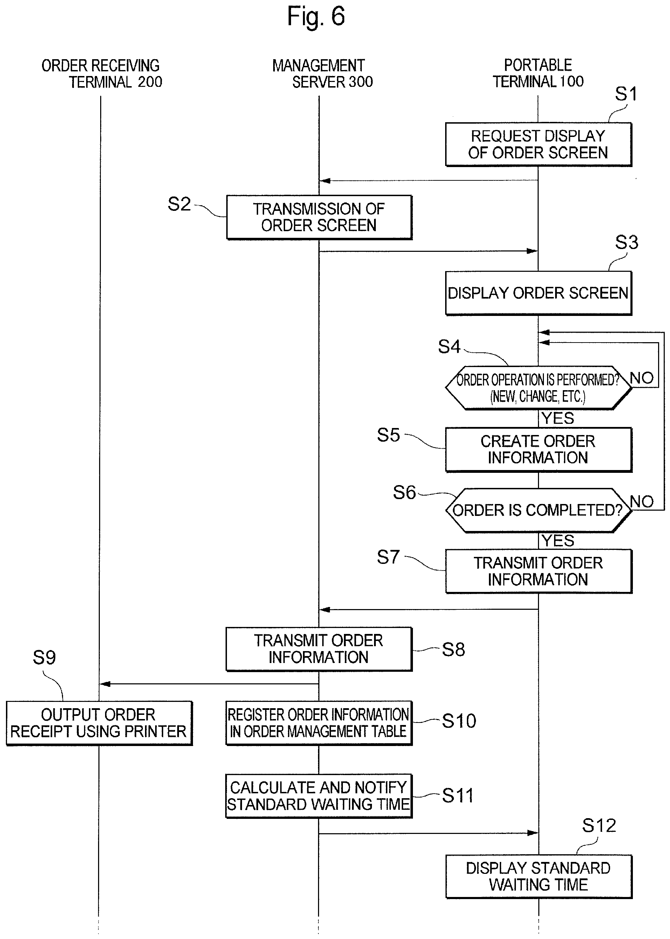

Figure 6 is a sequence chart showing a processing flow among the portable terminal 100, the management server 300, and the order receiving terminal 200 during an order.

The portable terminal 100 transmits a display request for an order screen to the management server 300 according to input operation of a URL or the like of an order Web page by the user (step S1). When receiving the display request from the portable terminal 100, the management server 300 searches through the Web management table TA3 using the display request as a search key to thereby read out an order screen of a corresponding store (the store A) and transmits the order screen to the portable terminal 100 (step S2). The portable terminal 100 displays the order screen (see Figure 2) received from the management server 300 (step S3) and waits for an input of order operation by the user (step S4).

When the order operation is not input (NO in step S4), the portable terminal 100 repeatedly executes the processing in step S3. On the other hand, when detecting the order operation (YES in step S4), the portable terminal 100 creates order information corresponding to the order operation (step S5). The order information includes a seat (e.g., "W210-013-T10"), an instruction (e.g., "none"), and the like of the user together with types and the numbers of commodities (e.g., "green soybeans/one and beer/three) selected by the user. Note that, as a method of specifying a seat, a method of causing users to directly input seat numbers or the like may be adopted. However, for example, a method of causing the portable terminal 100 to read QR codes corresponding to the seat numbers may be adopted.

After creating the order information, the portable terminal 100 determines whether the order is completed (step S6). When operation of additional order/change or the like is performed without touch operation or the like of an order completion button being performed (NO in step S6), the portable terminal 100 returns to step S4 and repeatedly executes the series of processing explained above. On the other hand, when the touch operation or the like of the order completion button displayed on the order screen is performed and it is determined that the order is completed (YES in step S6), the portable terminal 100 transmits the created order information to the management server 300 (step S7).

When receiving the order information from the portable terminal 100, the management server (a receiving unit) 300 refers to the client management table TA1 or the like and transmits (transfers) the order information to the order receiving terminal 200 of the store A (step S8). The management server (a generating unit) 300 generates (processes), on the basis of the order information transmitted from the portable terminal 100, order information including details of the order information (an order number, types and the numbers of ordered commodities, an order time, a seat position, an instruction, and the like) and a status (in the case of new registration, "unattended") of the order information and transmits the order information to the order receiving terminal 200 of the store A.

When receiving the order information from the management server 300, the order receiving terminal (a receiving unit) 200 of the store A outputs, using the printer 250, order receipts (two) on which the order information is printed (step S9). Note that it is likely that the responsible staff member does not notice even if the order receiving terminal 200 receives the order information anew. Therefore, when the order information is received anew, in order to surely inform the responsible staff member to that effect, a sound effect, a display message, or the like may be output from the order receiving terminal (a notifying unit) 200.

On the other hand, the management server (a storing unit) 300 registers the order information explained above in the order management table TA2 anew (step S10). The management server (a calculating unit and a notifying unit) 300 refers to a status and the like of other order information registered in the order management table TA2, calculates a predicted time until delivery of commodities corresponding to the order information is completed (hereinafter standard waiting time), and notifies the standard waiting time to the portable terminal 100 (step S11). In a memory (not shown in the figure) of the management server 300, a reference table, an algorithm, and the like for calculating the standard waiting time are stored. In the reference table, commodities and standard waiting times required for provision of the commodities are registered in association with each other. For example, a standard waiting time is "5 minutes" for a commodity "green soybeans" and a standard waiting time is "15 minutes" for a commodity "omelet". As a simple example, when there are "six" plates of "green soybeans" as "unattended" other order information and there are "two" "omelets" as order information of this time, a standard waiting time is "60 minutes" (=5 minutes×6+15 minutes×2). Naturally, the standard waiting time can change according to not only the unattended other order information but also a congestion stage of a store (e.g., the number of attendable responsible staff members) and the like. Therefore, the standard waiting time may be calculated taking into account these circumstances.

The portable terminal 100 displays the standard waiting time (e.g., "standard waiting time: approximately 40 minutes") notified from the management server 300 on the display screen (step S12) and thereafter ends the processing. By grasping the standard waiting time on the display screen, the user can eliminate concern that, for example, although the user orders commodities, the user cannot leave the seat because it is unknown when the commodities are delivered or the user worries about whether the commodities are actually delivered.

### (An update processing flow of a status)

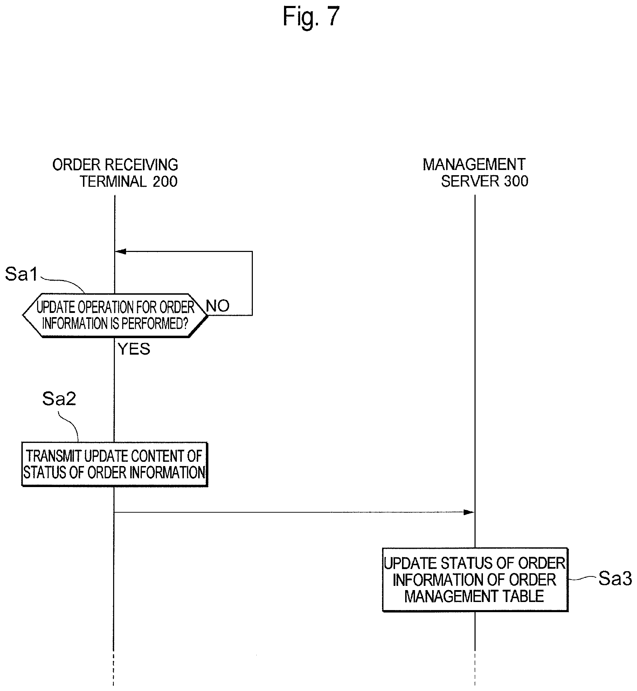

Figure 7 is a sequence chart showing a processing flow between the management server 300 and the order receiving terminal 200 during status update for order information. In the following explanation, a case in which delivery of an order is completed is assumed as an example in which a status is updated.

When delivery of ordered commodities is completed, the responsible staff member specifies order information, the delivery of which is completed, out of a plurality of kinds of order information displayed on the order management screen on the order receiving terminal 200. The responsible staff member swipes a status portion corresponding to the order information and selects a command for "delivery completed". When determining that the status of the order information is updated because the command for "delivery completed" is selected (YES in step Sa1), the order receiving terminal 200 transmits update content of the status of the order information including an order number and identification information of the store A to the management server 300 (step Sa2). Note that, when the status of the order information is not updated (NO in step Sa1), the order receiving terminal 200 repeatedly executes the processing in step Sa1. When receiving the update content of the status of the order information, on the basis of the order number and the identification information of the store A, the management server 300 refers to the order management table TA2, updates a status of corresponding order information (from "unattended" to "delivery completed") (step Sa3), and ends the processing. Note that, when the status is switched to "delivery completed", the order information is erased from the order management screen (so-called erasing).

As the update of the status of the order information, besides the "delivery completed", there are, for example, "cancelled" that means cancellation of an order and "cooking completed" that means completion of cooking of an ordered commodity. Naturally, types and the number of statuses are not meant to be limited to these types and numbers and can be set and changed as appropriate according to a job form.

### (Measures taken when stocks of commodities run out)

In an event venue where a large number of people gather, there is also concern that stocks of commodities run out early. When the stocks of the commodities run out (or the stocks of the commodities are about to run out), it is necessary to quickly stop reception of orders. Therefore, in this embodiment, control (reception stop, reception resumption, etc.) of order reception for the commodities is performed by using the order receiving terminal 200. To explain with reference to an example, the responsible staff member operates the order receiving terminal 200 to display the management setting screen and selects a commodity (in the following explanation, the commodity A) for which the order reception is stopped. When the stop operation for the order reception is performed, the order receiving terminal 200 notifies the management server 300 that the order reception for the commodity A should be stopped in the store A. On the basis of such notification, the management server 300 refers to the Web management table TA3 and performs processing for stopping reception of an order for the commodity A in the store A (e.g., disables selection of the commodity A).

In this way, according to this embodiment, it is possible to enjoy an advantage that it is possible to immediately stop order reception for a predetermined commodity with simple operation of the order receiving terminal 200. Note that, in the example explained above, the stocks of the commodities run out. However, the same explanation is applied not only when the stocks run out but also when business of the store A is suspended. In this case, the management setting screen of the portable terminal 100 is displayed and all order receptions in the store A are stopped. When the stop operation for the order reception is performed, the order receiving terminal 200 notifies the management server 300 that all order receptions in the store A are stopped. On the basis of such a notification, the management server 300 refers to the Web management table TA3 and performs processing for stopping reception of orders in the store A (e.g., disabling selection itself of the store A). Such processing may be executed.

As explained above, according to this embodiment, when receiving order information from the portable terminal 100, the management server 300 refers to a status and the like of other order information registered in the order management table TA2, calculates a standard waiting time until delivery of commodities corresponding to the order information is completed, and notifies the standard waiting time to the portable terminal 100. Consequently, by grasping the standard waiting time on the display screen of the portable terminal 100, the user can eliminate concern that, for example, although the user orders commodities, the user cannot leave the seat because it is unknown when the commodities are delivered or the user is uncertain whether the commodities are actually delivered.

### B. Others

Note that the present invention is not limited to the embodiment explained above and can be carried out in other various forms within a range not departing from the spirit of the present invention. Therefore, the embodiment is only an illustration in every aspect and should not be limitedly interpreted. For example, the order of the processing steps explained above can be optionally changed within a range in which processing contents are not inconsistent or the processing steps can be executed in parallel.

In the embodiment, the system is explained in which the order receiving terminal 200 and the management server 300 manage the order information in cooperation with each other. However, the configuration of the system is not limited to this. Various configurations can be adopted. For example, the order receiving terminal 200 side includes the functions of the management server 300, whereby it is possible to configure, with the order receiving terminal 200 alone, the apparatus including functions equivalent to the order system 1000.

In this embodiment, the case is illustrated in which one order-receiving terminal 200 is used in one facility (in the embodiment, the store A). However, it is also possible to use a plurality of order receiving terminals 200 in one facility. When the plurality of order receiving terminals 200 are used in one facility, data is shared among the order receiving terminals 200.

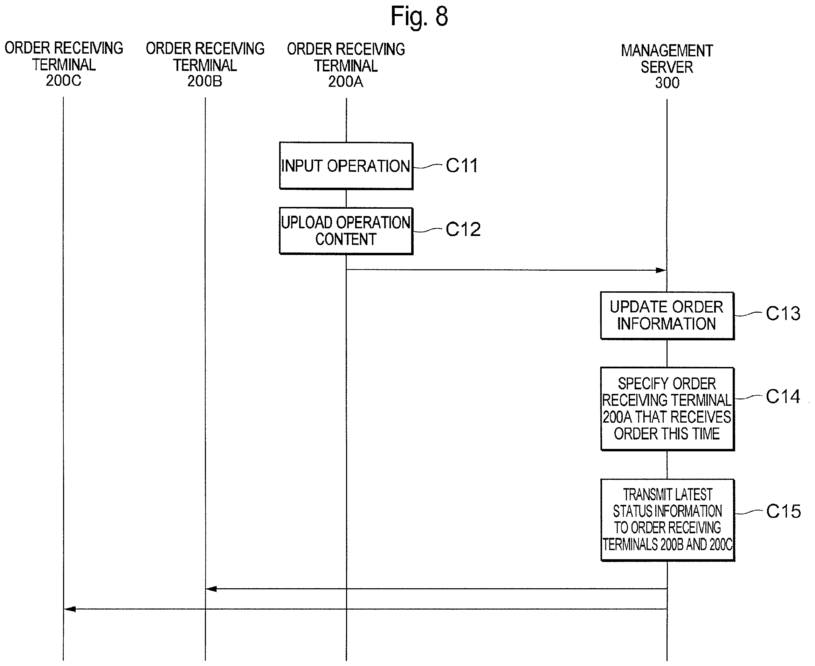

Figure 8 is a sequence chart of a case in which order management is performed by using three order receiving terminals 200A to 200C. For example, when a specific order receiving terminal 200 (the order receiving terminal 200A shown in Figure 8) is operated in the store A (C11), operation content (e.g., new registration of order information) is uploaded to the management server 300 (C12). The management server 300 updates, on the basis of the received new order information, the order information of the store A registered in the order management table TA2 (C13). The management server 300 refers to the client management table TA1 and specifies the order receiving terminal 200A that receives an order this time (C14). Since the three order receiving terminals 200A to 200C are registered in the client management table TA1 with respect to the store A, the management server 300 transmits the updated latest order information to the terminals other than the order receiving terminal 200A, that is, the order receiving terminals 200B and 200C (C15) and ends the processing.

As a result, the latest information is always reflected on the order receiving terminals 200 in a synchronized state. Consequently, even when the plurality of order receiving terminals 200 are used on one facility, it is possible to manage optimum order information without causing a deficiency, in which, for example, update of order information is not reflected in a part of the order receiving terminals 200.

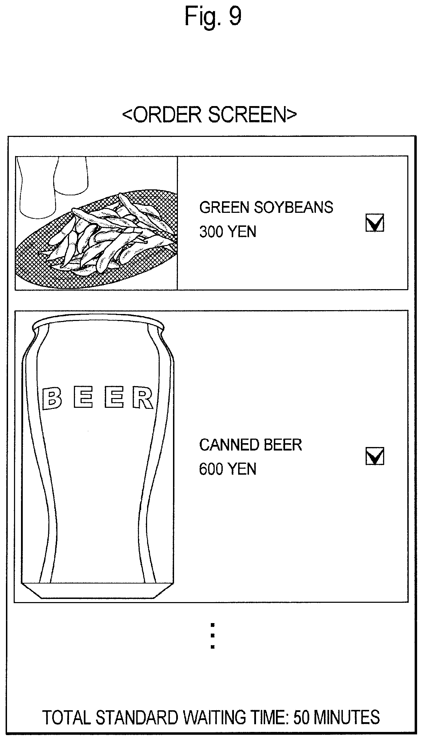

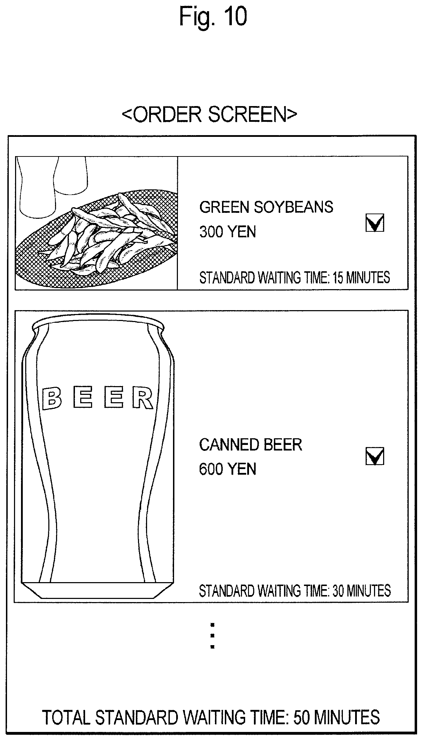

In this embodiment, when there are a plurality of ordered commodities, the management server (the calculating unit) 300 notifies a total standard waiting time until delivery of all the commodities is completed (see Figure 9). However, instead of (or in addition to) this, the management server 300 may notify individual standard waiting times concerning the respective ordered commodities (see Figure 10).

Furthermore, the management server 300 may notify a standard waiting time every time a commodity is selected.

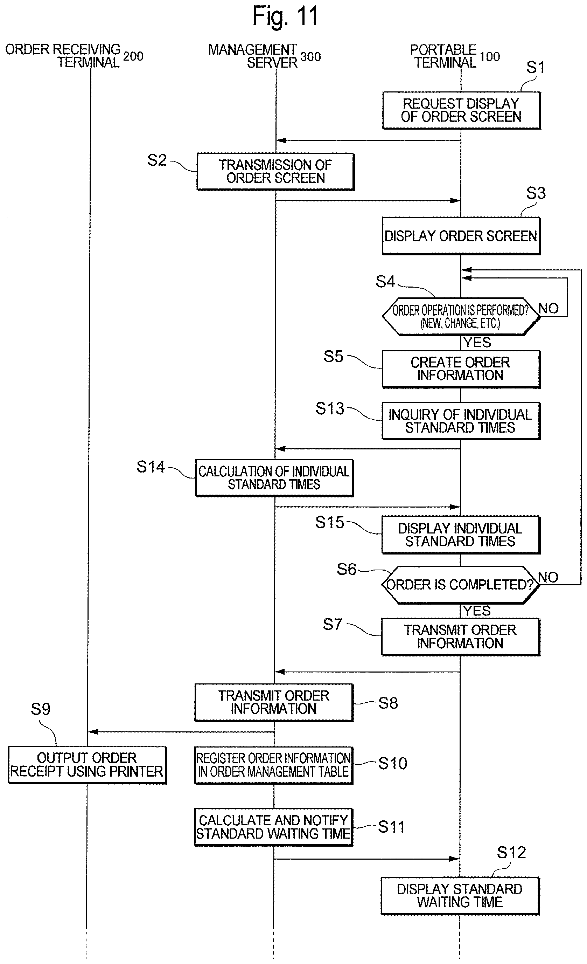

Figure 11 is a sequence chart showing a processing flow among the portable terminal 100, the management server 300, and the order receiving terminal 200 during an order according to a modification. Note that, in Figure 11, steps corresponding to Figure 6 are denoted by the same signs. Detailed explanation of the steps is omitted.

When detecting order operation (YES in step S4), the portable terminal 100 creates order information corresponding to the order operation (step S5). The order information includes a seat (e.g., "W210-013-T10") and an instruction (e.g., "none") of the user together with types and numbers of commodities (e.g., "green soybeans/one and beer/three") selected by the user. The portable terminal 100 inquires about standard waiting times (hereinafter "individual standard waiting times") concerning respective kinds of individual order information (step S13). When receiving the individual standard waiting times, the management server (the notifying unit) 300 refers to a status and the like of other order information registered in the order management table TA2, calculates individual standard waiting times, and notifies the individual standard waiting times to the portable terminal 100 (step S14).

The portable terminal 100 displays the individual standard waiting times (see Figure 10) notified from the management server 300 on the display screen (step S15). Thereafter, the portable terminal 100 determines whether the order completion button is, for example, touched by the user (step S6). For example, when an order is changed because an individual standard waiting time of a certain specific commodity is extremely long (e.g., "45 minutes"), operation for additional order/change or the like is performed without the order completion button being, for example, touched (NO in step S6). In this case, the portable terminal 100 returns to step S4. The series of processing explained above is repeatedly executed. On the other hand, when determining that the order completion button displayed on the order screen is, for example, touched and the order is completed (YES in step S6), the portable terminal 100 transmits the created order information to the management server 300 (step S7). Note that the subsequent operation can be explained the same as in the embodiment. Therefore, further explanation is omitted. In this way, every time a commodity is selected (i.e., before an order is completed), a standard waiting time until delivery of the commodity is seen. Therefore, it is possible to perform a more efficient commodity order.

In this embodiment, it is not particularly mentioned that calling is performed from an order until delivery of commodities is performed. However, telephone calling may be performed. In a commodity order, a message for desiring call setting by a telephone or confirming the user about the call setting is displayed on the portable terminal 100 (e.g., "You can set calling by a telephone. If you desire, please press the button below and then input a telephone number."). When the user desires the call setting by a telephone, the user inputs a telephone number according to the message. As a result, when delivery of commodities is performed, for example, even if the user leaves the seat and cannot be found, calling by a vendor or the like is performed. It is possible to surely perform the delivery of the commodities. Instead of (or in addition to) the telephone calling, calling by a text message may be performed. Specifically, in an order of commodities, a message for confirming the user whether the user desires call setting by a text message is displayed on the portable terminal 100 (e.g., "please input below a mail address for receiving a notification."). The user is capable of receiving calling by a text message by inputting a mail address according to the message.

A program for realizing the embodiments of the present invention explained above may be stored in a recording medium. If the recording medium is used, it is possible to install the program in a computer for managing turn waiting for a reservation in the facility. The recording medium having the program stored therein may be a non-transitory recording medium. The non-transitory recording medium is not particularly limited and may be, for example, a recording medium such as a CD-ROM.

## Claims

1. An order management server comprising:
a receiving unit that receives an order for commodities transmitted from a portable terminal;
a generating unit that generates order information including at least a type and a number of the ordered commodities and reception time of the order;
a storing unit that registers the generated order information;
a calculating unit that, when new order information is registered in the storing unit, calculates, on the basis of the order information already registered in the storing unit and the order information registered anew, a standard waiting time required for delivery of commodities related to the order information registered anew; and
a notifying unit that notifies the calculated standard waiting time to the portable terminal.

2. The order management server according to claim 1, wherein, when there are a plurality of commodities related to the order information registered anew, the calculating unit calculates individual standard waiting times concerning the respective commodities.

3. The order management server according to claim 1, wherein, when being inquired about the standard waiting time from the portable terminal, the notifying unit notifies the calculated standard waiting time.

4. An order system comprising:
an order receiving terminal that manages commodities; and
the order management server according to claim 1,
wherein
the order receiving terminal includes:
a receiving unit that receives the order information from the order management server; and
a notifying unit that, when the order information is received, notifies that the order information is received.

5. A non-transitory recording medium having recorded therein a program for causing a computer including a storing unit to realize:
a receiving function for receiving an order for commodities transmitted from a portable terminal;
a generating function for generating order information including at least a type and a number of the ordered commodities and reception time of the order;
a storing function for registering the generated order information in the storing unit;
a calculating function for, when new order information is registered in the storing unit, calculating, on the basis of the order information already registered in the storing unit and the order information registered anew, a standard waiting time required for delivery of commodities related to the order information registered anew; and
a notifying function for notifying the calculated standard waiting time to the portable terminal.

6. An order management server comprising:
a receiving unit that receives an order for commodities transmitted from a portable terminal;
a generating unit that generates order information including at least a type and a number of the ordered commodities and reception time of the order;
a storing unit that registers the generated order information;
a calculating unit that, when new order information is registered in the storing unit, calculates, on the basis of the order information already registered in the storing unit and the order information registered anew, a standard waiting time required for delivery of commodities related to the order information registered anew;
a notifying unit that notifies the calculated standard waiting time to the portable terminal; and
a calling setting unit that, when delivery of the commodities related to the order information is performed, causes a user of the portable terminal to select at least whether the user desires calling by a telephone or desires calling by a text message and performs calling of a type corresponding to selection operation of the user,
wherein
when there are a plurality of commodities related to the order information registered anew, the calculating unit calculates individual standard waiting times concerning the respective selected commodities before the order is completed and every time the commodities are selected, and
the notifying unit notifies the calculated individual standard waiting times to the portable terminal every time the commodities are selected.
